# EUROPÄISCHE PATENTANMELDUNG

(11) **EP 0 546 605 A1**
(43) Veröffentlichungstag der Anmeldung: **16.06.1993**
(21) Anmeldenummer: 92203664.5
(22) Anmeldetag: 27.11.1992
(51) Int. Cl.: H04L 12/40, G06F 13/374

(54) **Kommunikationssystem**

(30) Priorität: 04.12.1991 DE 4139933
(71) Anmelder: Philips Patentverwaltung GmbH, 22335 Hamburg (DE); Philips Electronics N.V., 5621 BA Eindhoven (NL)
(72) Erfinder: Menzenbach, Christof,, W-2000 Hamburg 1 (DE)
(74) Vertreter: von Laue, Hanns-Ulrich, Dipl.-Ing.

(57) **Zusammenfassung**

Für ein Kommunikationssystem zur Übertragung von Botschaften zwischen wenigstens zwei Gerätestationen in einem Kraftfahrzeug, wobei ein eine Botschaft empfangende Gerätestation anhand des Botschaftsinhaltes erkennt, ob diese Botschaft an sie gerichtet ist, ist für möglichst flexible Datenübertragung und hohe Konfigurationsflexibilität des Systems vorgesehen, daß für die Übertragung wenigstens zwei verschiedene Kommunikationstypen definiert sind, von denen ein erster Kommunikationstyp den Ruf wenigstens einer anderen Gerätestation zum Inhalt hat, wobei in der Botschaft ein Befehl bzw. eine gewünschte Funktion übertragen wird, und von denen ein zweiter Kommunikationstyp eine Mitteilung über einen neuen Gerätezustand der sendenden Gerätestation zum Inhalt hat, daß in jeder übertragenen Botschaft signalisiert wird, zu welchem Kommunikationstyp die Botschaft gehört, und daß eine empfangende Station in Abhängigkeit des Kommunikationstyps einer empfangenen Botschaft eine bestätigende Botschaft sendet oder nicht.

## Beschreibung

Die Erfindung betrifft ein Kommunikationssystem zur Übertragung von Botschaften zwischen wengistens zwei Gerätestationen, wobei eine eine Botschaft empfangende Gerätestation anhand des Botschaftsinhaltes erkennt, ob diese Botschaft (auch) an sie gerichtet ist.

Ein derartiges Kommunikationssystem ist aus der deutschen Offenlegungsschrift 35 06 118 bekannt. Bei diesem bekannten Kommunikationssystem empfängt jeder Teilnehmer alle Botschaften, verarbeitet aber nur diejenigen weiter, die für ihn Wichtig sind. Dies geschieht dadurch, daß jeder Teilnehmer eine Liste der für ihn relvanten Botschaften führt und mit einer empfangenen Botschaft vergleicht. Das dort beschriebene Kommunikationssystem bezieht sich ausschließlich auf die Steuerung eines Datenbusses, d.h., die reine Übertragung von Daten von einer Station an mindestens eine andere. Es wird dort nicht berücksichtigt, ob die angesprochenen Stationen die Botschaften sinnvoll verarbeiten konnten, oder z.B. aus Mangel an Speicher diese nicht in vollem Umfang niederlegen und verstehen konnten. Ferner wird dort in keiner Weise festgelegt, wie die Geräte auf bestimmte Botschaften reagieren sollen. Es handelt sich dort also mehr um eine Steuerung des Mediums (bus) und nicht um ein Protokoll zur Verständigung zwischen Geräten (Applikationen).

Es ist Aufgabe der Erfindung, ein Kommunikationssystem der eingangs genannten Art zu schaffen, daß eine flexiblere Übertragung verschiedener Dateninhalte zwischen beliebigen Gerätestationen des Kommunikationssystems gestattet.

Diese Aufgabe ist erfindungsgemäß dadurch gelöst, daß für die Übertragung wenigstens zwei verschiedene Kommunikationstypen definiert sind, von denen ein erster Kommunikationstyp den Ruf wenigstens einer anderen Gerätestation zum Inhalt hat, wobei in der Botschaft ein Befehl bzw. eine gewünschte Funktion übertragen wird, und von denen ein zweiter Kommunikationstyp eine Mitteilung über einen neuen Gerätezustand der sendenden Gerätestation zum Inhalt hat, daß in jeder übertragenen Botschaft signalisiert wird, zu welchem Kommunikationstyp die Botschaft gehört, und daß eine empfangende Station in Abhängigkeit des Kommunikationstyps einer empfangenen Botschaft eine bestätigende Botschaft sendet oder nicht.

Es sind für Übertragungen von Botschaften innerhalb des Kommunikationssystems zwischen wenigstens zwei Gerätestationen verschiedene Kommunikationstypen definiert. Die sendende Station kann im Prinzip frei zwischen diesen Kommunikationstypen für eine Botschaft wählen, wobei jedoch aufgrund des Ablaufes bestimmte Kommunikationstypen ausscheiden. Es ist jedenfalls nicht von vornherein festgelegt, welchen Kommunikationstyp eine bestimmte Botschaft haben muß, die an eine bestimmte Gerätestation gerichtet ist.

Es sind wenigstens zwei Kommunikationstypen vorgesehen, von denen ein erster Kommunikationstyp an wenigstens eine weitere Gerätestation ein Befehl bzw. eine gewünschte Funktion überträgt. Es wird hier also quasi durch die sendende Gerätestation eine Art Steuerung der angerufenen Gerätestation über eine Botschaft des ersten Kommunikationstyps vorgenommen.

Es ist ferner wenigstens ein zweiter Kommunikationstyp vorgesehen, welcher eine Mitteilung über einen neuen Gerätezustand der sendenden Gerätestation an eine oder mehrere weitere Gerätestationen zum Inhalt hat. Hierbei kann es sich beispielsweise um neue Zustände der sendenden Gerätestation oder um neue Daten handeln.

In jeder Botschaft wird in kodierter Form übertragen, zu welchem Kommunikationstyp die Botschaft gehört. Somit kann die empfangene Station sofort erkennen, um welchen Kommunikationstyp es sich handelt.

Dies ist deshalb wichtig, weil eine Station, die eine Botschaft eines bestimmten Kommunkationstyps empfängt, in Abhängigkeit der Art des Kommunikationstyps weiter handeln muß. Es kann für die verschiedenen Kommunikationstpyen eine verschiedene Reaktion der empfangenden Sendestation vorgesehen sein, so kann beispielsweise bei bestimmten Typen eine Antwort erwartet werden, während bei anderen Botschaften anderer Kommunikationstypen eine solche nicht erwartet wird.

Dieses Kommunikationssystem gestattet eine äußerst flexible Übertragung von Daten, da für jede einzelne Botschaft der Kommunikationstyp frei gewählt werden kann und in Abhängigkeit des Inhaltes der Botschaft in geeigneter Weise vorgesehen werden kann. Ein weiterer wesentlicher Vorteil des Kommunikationssystems liegt in seiner Flexibilität bezüglich des Aufbaus. Da die einzelnen Gerätestationen im Prinzip nicht wissen, welche weiteren Gerätestationen angeschlossen sind, ist das System in seinem Aufbau flexibel, d.h. die Konfiguration des Systems kann geändert werden, ohne daß die einzelnen Gerätestationen dies wissen müssen bzw. an die geänderte Konfiguration angepaßt werden müssen. Es können also einzelne Gerätestationen bzw. Geräte dem System hinzugefügt werden oder aus diesem herausgenommen werden, ohne daß weiterhin angeschlossene Gerätestationen dies wissen müssen. Auch müssen neue angeschlossene Gerätestationen nicht speziell an das Kommunikationssystem angepaßt werden.

Das Kommunikationssystem ist, beispielsweise in einem Fahrzeug, für ein breites Spektrum von Geräten bzw. Gerätefunktionen einsetzbar, z.B. für Autoradio, CD-Player, Verstärker, Telefon, Bord-Computer und ähnliches.

Nach einer Ausgestaltung der Erfindung ist vorgesehen, daß nach einer Botschaft des ersten Kommunikationstyps eine Botschaft eines dritten Kommunikationstyps erwartet wird, die eine Antwort der angerufenen Gerätestation an die rufende Gerätestation zum Inhalt hat.

Es wurde oben beschrieben, daß in Abhängigkeit des Kommunkationstyps einer Botschaft verschiedene Reaktionen einer empfangenden Sendestation erwartet werden können. In diesem Zusammenhang ist es insbesondere vorteilhaft, daß nach dem Aussenden einer Botschaft des ersten Kommunikationstyps durch die empfangende Sendestation eine Bestätigung erwartet wird. Diese Bestätigung kann beispielsweise darin bestehen, zu bestätigen, daß der übertragende Befehl einer Botschaft des ersten Kommunikationstyps ausgeführt wurde. Diese bestätigende Botschaft ist vorteilhafterweise eine solche eines dritten Kommunikationstyps, die also quasi die Antwort der angerufenen Gerätestation an die rufende zum Inhalt hat. Durch die Wahl eines dritten Kommunikationstyps weiß die ursprünglich sendende Station sofort, daß es sich um eine Antwort auf ihre Botschaft des ersten Kommunikationstyps handelt. Dies ergibt sich unmittelbar aus der Kennzeichnung des Kommunikationstyps innerhalb der Botschaft und muß nicht logisch erkannt werden.

Gemäß einer weiteren Ausgestaltung ist vorgesehen, daß die rufende Station nach maximal vier Botschaften des ersten Kommunikationstyps die entsprechenden bestätigenden Botschaften des dritten Kommunikationstyps erwartet.

Es ist nicht unbedingt erforderlich, daß sofort nach jeder Botschaft des ersten Kommunikationstyps eine Antwort in Form einer Botschaft des dritten Kommunkationstyps stattfindet. Vorteilhaft ist vielmehr festzulegen, daß spätestens nach vier Botschaften des ersten Kommunikationstyps die entsprechenden Antworten des Kommunikationstyps erfolgen müssen. Es steht somit für die empfangende Station ein größerer zeitlicher Spielraum für die Antworten zur Verfügung.

Eine weitere Ausgestaltung der Erfindung sieht vor, daß nach Aussenden einer Botschaft des zweiten Kommunikationstyps an eine oder mehrere angerufene Gerätestation(en) durch diese keine Antwort gegeben wird.

Bei Botschaften des zweiten Kommunikationstyps handelt es sich um allgemeine Mitteilungen über Ereignisse bzw. Zustandsänderungen der sendenden Gerätestation. Diese Botschaften werden sich meist an mehrere empfangende Stationen richten, so daß es vorteilhaft ist, nicht von den einzelnen Gerätestationen eine Antwort zu erwarten. Es kann also vorteilhafterweise festgelegt werden, daß die empfangenden Stationen einer Botschaft des zweiten Kommunikationstyps keine Antwort bzw. Bestätigung geben. Es wird also im Normalfall davon ausgegangen, daß diese Gerätestationen die Botschaft des zweiten Kommunikationstyps verstanden haben.

Um abzusichern, daß Gerätestationen, die die Botschaft gegebenenfalls nicht verstanden haben, diese noch einmal übertragen bekommen, ist nach einer weiteren Ausgestaltung der Erfindung vorgesehen, daß eine mit einer Botschaft des zweiten Kommunikationstyps angerufene Sendestation eine eine Fehlermeldung darstellende Botschaft eines vierten Kommunikationstyps an die sendende Station sendet, sofern die empfangende Station die ausgesendete Botschaft der zweiten Kommunikationsart nicht verstanden hat. Hat also eine empfangende Sendestation eine Botschaft des zweiten Kommunikationstyps nicht verstanden, so sendet sie eine Botschaft eines vierten Kommunikationstyps, welche eine entsprechende Meldung an die sendende Station gibt. Auch hier gilt, daß alleine die Tatsache, daß es sich um eine Botschaft des vierten Kommunikationstyps handelt, die ursprünglich sendende Station bereits sagt, daß nun eine Fehlermeldung folgt.

Um der empfangenden Station, welche die ursprüngliche gesendete Botschaft des zweiten Kommunikationstyps nicht verstanden hat und daraufhin eine Botschaft des vierten Kommunikationstyps ausgesendet hat, die ursprünglich gesendete Botschaft des zweiten Typs doch noch zukommen zu lassen, kann vorteilhafterweise vorgesehen sein, daß die ursprünglich sendende Station nach Erhalt einer Fehlermeldung in Form einer Botschaft des vierten Kommunikationstyps die ursprünglich gesendete Botschaft des zweiten Kommunikationstyps wiederholt und daß diese Wiederholung einer Botschaft des zweiten Kommunikationstyps als fünfter Kommunikationstyp in der Botschaft gekennzeichnet ist.

Die nochmals übertragende Botschaft des zweiten Kommunikationstyps hat also wiederum einen eigenen Kommunikationstyp, der als fünfter Kommunikationstyp eine Wiederholung einer Botschaft des dritten Kommunikationstyps zum Inhalt hat. Durch die Wahl des fünften Kommunikationstyps für diese Botschaft ist für diejenigen Sendestationen, die die ursprünglich übertragende Botschaft des dritten Kommunikationstyps verstanden haben, klar, daß es sich um eine Wiederholung handelt, die sie nicht mehr betrifft, da sie bereits die ursprüngliche Botschaft verstanden haben. Diese Wiederholung richtet sich nur an diejenige Sendestation, die die Fehlermeldung in Form einer Botschaft des vierten Kommunikationstyps ausgesendet hat.

Da grundsätzlich alle Gerätestationen, die an das Kommunikationssystem angeschlossen sind, auch Botschaften senden können, ist zu regeln, in welcher Reihenfolge Botschaften verschiedener Gerätestationen übertragen werden, wenn mehrere Gerätestationen mehr oder weniger gleichzeitig solche Botschaften übertragen wollen.

Eine Lösung der Prioritätenregelung sieht vor, daß jede Gerätestation, die eine Botschaft senden will, zunächst bei einer Prioritäten-Vergabeeinheit anfragt, ob die zu sendende Botschaft gesendet werden darf bzw. welche Priorität diese Botschaft hat.

Bevor eine Gerätestation also eine Botschaft senden kann, muß sie zunächst bei einer Prioritäten-Vergabeeinheit anfragen, ob die zu sendende Botschaft gesendet werden darf bzw. welche Priorität diese Botschaft hat. Der Vorteil dieser Regelung besteht insbesondere darin, daß die Prioritäten-Vergabe für einzelne Gerätestationen oder auch für einzelne Botschaften, die die jeweilige Gerätestation senden will, aktuell geändert werden kann. Es kann also je nach Zustand der Gerätestationen bzw. des Kommunikationssystems die Prioritätenregelung laufend geändert bzw. angepaßt werden.

Gemäß einer weiteren vorteilhaften Ausgestaltung der Erfindung ist für Audio-/Video-Quellen und nachgeschaltete Verstärker bzw. Bildschirmgeräte die über Gerätestationen in den Kommunikationssystemen kommunizieren, vorgesehen, daß für die Umschaltung einer Quellenfunktion mittels einer Botschaft des ersten Kommunikationstyps zunächst die Quelle und erst nach Bestätigung durch die Quelle mittels einer Botschaft des dritten Kommunikationstyps mittels einer Botschaft des ersten Kommunikationstyps der Verstärker bzw. das Bildschirmgerät umgeschaltet wird und daß bei ausbleibender Bestätigung entweder der Quelle oder des Verstärkers bzw. Bildschirmgerätes mittels einer Botschaft des dritten Kommunikationstypes der Umschaltvorgang abgebrochen wird, d.h. alle beteiligten Geräte wieder in ihre Ausgangsfunktion zurückversetzt werden.

Es wird also zunächst die Quellenfunktion umgeschaltet. Dies geschieht mittels einer Botschaft des ersten Kommunikationstyps. Diese Umschaltung muß durch die umgeschalteten Quellen durch Botschaften des dritten Kommunikationstyps bestätigt werden. Geschieht dies, so wird nachfolgend der Verstärker auf die neue Quelle umgeschaltet, was ebenfalls mittels einer Botschaft des ersten Kommunikationstyps geschieht. Der Verstärker muß dies durch eine Botschaft des dritten Kommunkationstyps bestätigen. Erfolgt entweder durch die umgeschalteten Quellen oder durch den umgeschalteten Verstärker bzw. das umgeschaltete Bildschirmgeräte keine Bestätigung in Form einer Botschaft des dritten Kommunikationstyps, so werden sowohl die Quelle wie auch der Verstärker bzw. das Bildschirmgerät wieder in ihren ursprünglichen Zustand zurückgeschaltet, d.h. alle beteiligten Geräte werden wieder in ihre Ausgangsfunktion zurückversetzt. Im Ergebnis wird also bei nicht geglückter Umschaltung entweder der Quelle oder des Verstärkers wieder der ursprüngliche Zustand hergestellt. Diese Vorgehensweise macht das System störsicher, da eine fehlerhaft verlaufende bzw. nicht mögliche Umschaltung sofort wieder rückgängig gemacht wird.

Wie nach einer weiteren Ausgestaltung der Erfindung vorgesehen ist, kann die Übertragung der Botschaften vorteilhafterweise über einen Datenbus stattfinden. Dabei kann es sich beispielsweise um einen Datenbus gemäß der CAN-Spezifikation erfolgen. Im Prinzip ist aber die Wahl des Datenbussystems beliebig und kann den jeweiligen Gegebenheiten angepaßt werden.

Für eine Gerätestation des Kommunikationssystems ist nach einer Ausgestaltung der Erfindung vorgesehen, daß die Gerätestation fünf Funktionsgruppierungen (layer) aufweist, daß eine erste Funktionsgruppierung (application layer) die Anwendungen bzw. Funktionen innerhalb eines der Gerätestation zugeordneten Gerätes steuert, daß eine zweite Funktionsgruppierung (session layer) die Steuerung der Übertragung von Botschaften einschließlich Definition bzw. Bestimmung des jeweiligen Kommunikationstyps vornimmt, daß eine dritte Funktionsgruppierung (network layer) die Auswahl eines Datenbussystems vornimmt, über das die Botschaften übertragen werden sollen, und daß eine vierte Funktionsgruppierung (logical link control-layer) die Steuerung gemäß der für diesen Datenbus vorgesehenen Protokolle übernimmt.

Die Gerätestation muß sowohl das ihr zugeordnete Gerät steuern, als auch die Steuerung der Botschaften, die gemäß dem Kommunikationssystem beispielsweise mit verschiedenen Kommunikationstypen gekennzeichnet sein müssen, entsprechend steuern. Ferner muß die Gerätestation Protokolle, also Ablaufsteuerungen für einen gegebenenfalls angeschlossenen Datenbus, über den die Botschaften übertragen werden, übernehmen. Dazu weist die Gerätestation wenigstens vier Funktionsgruppierungen auf. Diese Funktionsgruppierungen werden international üblicherweise englisch als layer bezeichnet. Jeder dieser Funktionsgruppierungen bzw. layer ist jeweils ein bestimmter Funktionsbereich zugeordnet. So ist eine erste Funktionsgruppierung vorgesehen, die als applicaton layer bezeichnet wird und die die Anwendungen bzw. Funktionen innerhalb des zugeordneten Gerätes steuert. Eine zweite Funktionsgruppierung, als session layer bezeichnet, übernimmt die Steuerung von Botschaften nach dem Kommunikationssystem. Sie ist also u.a. dafür zuständig, die verschiedenen Kommunikationstypen einer gesendeten bzw. empfangenen Botschaft zu definieren bzw. zu bestimmen. Sie übernimmt die gesamte Ablaufsteuerung gemäß dem definierten Kommunikationssystem. Eine dritte Funktionsgruppierung, als network layer bezeichnet, wählt nun aus, über welchen externen Datenbus die Botschaften gemäß dem Kommunikationssystem übertragen werden sollen. Es kann in einem Fahrzeug mehrere Datenbussysteme geben, wobei für bestimmte Botschaften an bestimmte Gerätestationen gegebenenfalls nur ein bestimmter Datenbus infrage kommt, der durch diesen network layer ausgewählt wird. Die vierte Funktionsgruppierung, als logical link control-layer bezeichnet, übernimmt nun die Ablaufsteuerung gemäß der Protokolle des ausgewählten Datenbusses.

Durch diesen Aufbau der Gerätestation, durch die Eigenschaften des oben beschriebenen Kommunikationssystems und durch die entsprechend angepaßte Ausgestaltung der ersten Funktionsgruppierung, nämlich des application layers, wird für die einzelne Gerätestation eine volle Konfigurationsflexibilität erzielt, d.h. die Gerätestation kann infolge ihres oben beschriebenen Aufbaus in dem Kommunikationssystem frei kommunizieren, ohne daß das ihr zugeordnete Gerät speziell angepaßt werden muß. Im folgenden wird die Erfindung anhand der Zeichnung näher erläutert. Es zeigen:
Fig. 1 eine schematische Darstellung eines Kommunikationssystems mit drei Gerätestationen sowie symbolisch angedeutete zwischen diesen übertragene Botschaften verschiedener Kommunikationstypen,
Fig. 2 eine entsprechende Darstellung mit anderer Konfiguration der Gerätestationen,
Fig. 3 eine schematische Darstellung des wesentlichen Aufbaus einer Gerätestation nach den

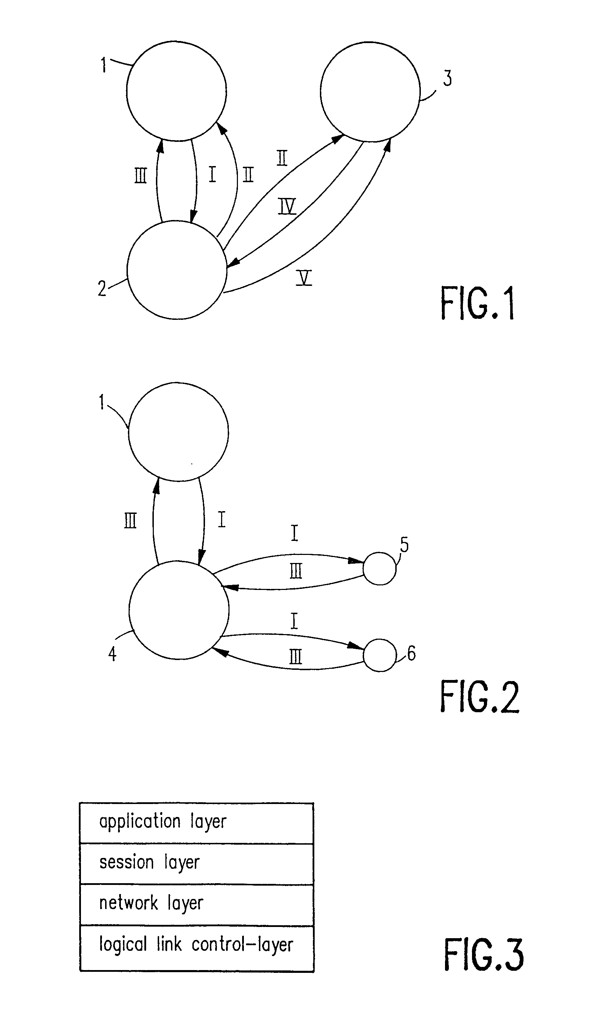

Fig. 1 und 2 mit schematisch angedeuteten Funktionsgruppierungen (layer).

Das Kommunikationssystem gemäß der Erfindung ist grundsätzlich für fast alle in einem Fahrzeug vorkommende elektronische Geräte geeignet, die bestimmte Steuerungsaufgaben haben, bei denen es sich beispielsweise um Anzeigen handeln kann, aber auch Audio- bzw. Videogeräte bzw. Anlagen, die sich aus mehreren Geräten zusammensetzen, aber auch beispielsweise um bestimmte Computer, die im Fahrzeug wiederum Steuerungsfunktionen übernehmen.

In der Darstellung gemäß Fig. 1 wird als Beispiel eine Steuerung eines CD-Players durch ein Bedienpult angenommen. Es ist ferner eine Anzeigeeinheit vorgesehen, die die jeweils neu eingestellten Zustände des CD-Players anzeigt.

Die Kommunikation kann vorteilhafterweise über einen in dem Fahrzeug vorhandenen Datenbus erfolgen, bei dem es sich beispielsweise um einen Bus nach dem CAN-System handeln kann.

In der Darstellung gemäß Fig. 1 sind die übertragenden Botschaften schematisch durch Pfeile dargestellt, die mit dem jeweiligen Kommunikationstyp der Botschaft gekennzeichnet sind.

Zu Beginn jeder Botschaft kann durch bestimmte festgelegte Bits signalisiert werden, welchen Kommunikationstyp die nachfolgend übertragene Botschaft angehört.

In Fig. 1 ist schematisch eine erste Gerätestation 1 dargestellt, die beispielsweise einem in der Fig. 1 nicht dargestellten Bedienfeld zugeordnet sein kann. Es ist eine zweite Gerätestation 2 angedeutet, welche beispielsweise einem ebenfalls in der Fig. nicht dargestellten CD-Player zugeordnet ist. Eine dritte in der Fig. 1 angedeutete Gerätestation 3 ist einem nicht dargestellten Anzeigefeld zugeordnet.

Im folgenden soll anhand eines Beispieles erläutert werden, wie eine Kommunikaton zwischen diesen Geräten für den Beispielsfall einer gewünschten Umschaltung des CD-Players ablaufen könnte.

In dem gewählten Beispielsfall gibt ein Bediener an das in der Fig. 1 nicht dargestellte Bedienfeld durch Betätigung einer Taste den Befehl, daß der nicht dargestellte CD-Player auf die nächste Spur (track) schalten soll. Die Gerätestation 1 gibt daraufhin eine entsprechende Botschaft des ersten Kommunikationstyps, in der dieser Befehl übertragen wird, an die Gerätestation 2, die dem nicht dargestellten CD-Player zugeordnet ist. Es wird nun davon ausgegangen, daß die Gerätestation 2 diesen Befehl verstanden hat und daß die CD-Player entsprechend dem Befehl auf die nächste Spur (track) schaltet. Da auf die Botschaft des ersten Kommunikationstyps eine entsprechende Antwort in Form einer Botschaft des dritten Kommunikationstyps erwartet wird, gibt die Gerätestation 2 die entsprechende Botschaft an die Gerätestation 1. Hätte die Gerätestation 2 die Botschaft des ersten Kommunikationstyps nicht erhalten, so hätte sie keine Botschaft des dritten Kommunikationstyps an die Gerätestation 1 gegeben. Die Gerätestation 1 wüßte dann, daß der Befehl nicht ausgeführt worden ist. Hätte die Gerätestation 2 die Botschaft des ersten Kommunikatonstyps nicht verstanden oder nicht ausführen können, so hätte sie eine Botschaft des dritten Kommunikationstyps mit einer Beschreibung des aufgetretenen Fehlers an die Gerätestation 1 gegeben. In dem Beispielsfall gemäß Fig. 1 soll jedoch davon ausgegangen werden, daß der Befehl ordnungsgemäß ausgeführt wurde und daß eine bestätigende Botschaft des dritten Kommunikationstyps an die Station 1 gegeben wurde.

Infolge der Ausführung der Botschaft, auf die nächste Spur zu schalten, muß dieser neue Zustand den beteiligten Gerätestationen mitgeteilt werden. Dies geschieht nun in Form einer Botschaft des zweiten Kommunikationstyps, welche Ereignisse bzw. neue Zustände von Gerätestationen zum Inhalt hat. In diesem Falle signalisiert die Gerätestation 2, daß der ihr zugeordnete CD-Player nunmehr eine andere Spur abspielt und gibt also in der Botschaft des zweiten Kommunikationstyps nunmehr diese neue Spur an die angeschlossenen Gerätestationen. Diese Botschaft des zweiten Kommunikationstyps richtet sich pauschal an alle Gerätestationen und gelangt also in dem in der Fig. 1 dargestellten Beispielsfall sowohl an die Gerätestation 1 als auch an die Gerätestation 3. Wenn die Gerätestationen eine Botschaft des zweiten Kommunikationstyps verstanden haben, geben sie keine bestätigende Antwort. Eine Reaktion auf eine Botschaft des zweiten Kommunikationstyps erfolgt nur, wenn eine Gerätestation die Botschaft nicht verstanden hat. In dem Beispielsfall gemäß Fig. 1 wird davon ausgegangen, daß die Gerätestation 3 die Botschaft der zweiten Kommunikationsart der Gerätestation 2 nicht verstanden hat. Die Gerätestation 3 gibt daraufhin eine Botschaft des vierten Kommunikationstyps an die Gerätestation 2, in welcher sie dieser mitteilt, daß sie die zuvor übertragene Botschaft des zweiten Kommunikationstyps nicht verstanden hat.

Der Gerätestation 2 ist also nun bekannt, daß die Gerätestation 3 die Botschaft nicht verstanden hat und ergo auch die ihr zugeordnete Anzeigeeinheit den neuen Gerätezustand nicht anzeigen kann. Die Gerätestation 2 wiederholt nun die in der Botschaft des zweiten Kommunikationstyps enthaltene Nachricht. Diese Wiederholung wird jedoch als Botschaft des fünften Kommunikationstyps gekennzeichnet. Damit ist beispielsweise für die Gerätestation 1 klar, daß es sich um eine Wiederholung der vorher schon gesendeten Botschaft des zweiten Kommunikationstyps handelt und daß diese Wiederholung die Gerätestation 1 nicht mehr betrifft, da sie ja bereits die ursprüngliche Botschaft verstanden hat. Die Wiederholung in Form der Botschaft des fünften Kommunikationstyps wird jedoch durch die Gerätestation 3 ausgewertet. Hat die Gerätestation 3 diese Botschaft verstanden, so kann sie nun die in ihr enthaltene Nachricht auswerten und die neue Spur des CD-Spielers auf dem ihr zugeordneten Bedienfeld anzeigen.

In Fig. 2 ist für ein anderes Beispiel eine andere Konfiguration von Gerätestationen dargestellt. Bei einer ersten Gerätestation 1 kann es sich wiederum um die gleiche Gerätestation 1 gemäß Fig. 1 handeln, der ein Bedienfeld zugeordnet ist. Bei einer weiteren Gerätestation 4 handelt es sich beispielsweise um eine solche, die einem sogenannten Body-Controller in einem Fahrzeug zugeordnet ist, also einer Art Steuergerät, das bestimmte Steuerungen im Fahrzeug, beispielsweise Licht, elektrische Fensterheber, oder ähnliches steuert. Das der Gerätestation 4 zugeordnete Gerät übernimmt diese Steuerung jedoch nicht direkt, sondern kommuniziert seinerseits wiederum mit weiteren Gerätestationen 5 bzw. 6.

Die Kommunikation zwischen den Gerätestationen 1, 4, 5 und 6 läuft gemäß dem erfindungsgemäßen Kommunikationssystem ab. Jedoch kann die Übertragung zwischen der Gerätestation 1 und 4 beispielsweise über einen anderen Datenbus erfolgen als die Datenübertragung zwischen beispielsweise der Gerätestation 4 und den Stationen 5 und 6. Dieser Einsatz verschiedener Datenbussysteme ist aufgrund des später erläuterten Aufbaus der Gerätestation möglich.

Für die Darstellung gemäß Fig. 2 wurde ein Beispielsfall gewählt, in dem der der Gerätestation 1 zugeordneten Bedieneinheit ein Befehl eingegeben wurde, das Standlicht des Fahrzeugs, in dem sich die Gerätestationen befinden, einzuschalten.

Die Gerätestation 1 gibt daraufhin eine Botschaft des ersten Kommunikationstyps mit dem entsprechenden Inhalt an die Gerätestation 4. Die Gerätestation 4 ihrerseits bzw. das ihr zugeordnete Gerät, schalten die entsprechenden Lampen jedoch nicht unmittelbar sein, sondern die Gerätestation 4 beauftragt ihrerseits zwei weitere Steuereinheiten mit der entsprechenden Einschaltung des Lichts. Diesen Steuereinheiten sind die in der Fig. 2 angedeuteten Gerätestation 5 und 6 zugeordnet. Beispielsweise kann die Gerätestation 5 bzw. das ihr zugeordnete Gerät, das die Frontlichter einschalten, während die Gerätestation 6 bzw. das ihr zugeordnete Gerät die entsprechenden Rücklichter einschaltet.

Nachdem die Gerätestation 1 den Befehl zum Lichteinschalten an die Gerätestation 4 gegeben hat, gibt diese der Gerätestation 5 in Form einer Botschaft des ersten Kommunikationstyps den Befehl, die Frontlichter einzuschalten. Ferner gibt die Gerätestation 4, ebenfalls in Form einer Botschaft des ersten Kommunikationstyps, an die Gerätestation 6, die Rücklichter einzuschalten. Nachdem beide Gerätestationen bzw. die ihnen zugeordneten Geräte diese Befehle ausgeführt haben, geben die Gerätestationen 5 und 6 jeweils eine bestätigende Botschaft des dritten Kommunikationstyps an die Gerätestation 4. Hat die Gerätestation 4 ihrerseits beide bestätigende Botschaften des Kommunikationstyps 3 erhalten, gibt sie eine Botschaft des dritten Kommunikationstyps an die Gerätestation 1, die ihrerseits die von der Gerätestation 1 zuvor übertragene Botschaft des ersten Kommunikationstyps bestätigt bzw. deren Ausführung bestätigt.

Die Steuerung der Gerätestation in dem Kommunikationssystem erfordert nicht nur eine Ablaufsteuerung der gemäß in dem Kommunikationssystem vorgesehenen Vorgehensweise, beispielsweise der Kennzeichnung der Botschaften mit bestimmten Kommunikationstypen, sondern auch eine weitere Übertragung dieser Botschaften gegebenenfalls über ein Datenbussystem. Dazu weist die Steuerung jeder Gerätestation mehrere Funktiongruppierungen auf, die in Fig. 3 schematisch angedeutet sind. Diese Funktionsgruppierungen werden international als "layer" bezeichnet.

Eine erste Funktionsgruppierung innerhalb der Gerätestation wird als Application layer bezeichnet. Sie steuert die Abläufe innerhalb des in der Gerätestation zugeordneten Gerätes, stellt also quasi einen Mittler dar zwischen dem Kommunikationssystem bzw. dem in ihr übertragenen Botschaften und der angeschlossenen Gerätestation.

Eine zweite Funktionsgruppierung, die als session layer bezeichnet werden kann, übernimmt die Ablaufsteuerung gemäß den in dem Kommunikationssystem vorgesehenen Regeln. Dieser layer ist also beispielsweise zuständig für die Definition bzw. das Erkennen verschiedener Kommunikationstypen von in dem Kommunikationssystem übertragenen Botschaften.

Eine dritte Funktionsgruppierung, als network layer bezeichnet, wählt nun für die Übertragung von Botschaften zwischen Gerätestationen das jeweils geeignete bzw. auch einzig mögliche Datenbussystem aus. Die Botschaften werden also gegebenenfalls über verschiedene Datenbusse übertragen. Dies kann beispielsweise gemäß Fig. 2 für die Übertragung zwischen den Gerätestationen 1 und 4 ein anderer Datenbus sein als für die Übertragung zwischen der Station 4 einerseits und den Stationen 5 und 6 andererseits.

Eine vierte Funktionsgruppierung innerhalb der Gerätestation, als logical link control-layer bezeichnet, steuert nun den Ablauf innerhalb des gewählten Datenbussystems, paßt also die übertragenen Botschaften dem Protokoll des gewählten Datenbussystems an.

Der Aufbau jeder Gerätestation nach diesem Grundprinzip gestattet eine sehr flexible Anpassung der Gerätestation bzw. des angeschlossenen Gerätes an das Kommunikationssystem und erlaubt die volle Konfigurationsflexibilität des Kommunikationssystems. Die Anpassung an das jeweilige Geräte wird über den Application layer vorgenommen. Der session layer übernimmt dann die Kommunikation entsprechend den Definitionen des Kommunikationssystems. Die weitere Anpassung an die Hardware bzw. die Protokolle eines Datenbusses, über das die Botschaften des Kommunikationssystems übertragen werden sollen, ist dann Aufgabe der layer 3, was die Auswahl des Datenbusses betrifft, und des layers 4, was die Ablaufsteuerung angeht.

## Patentansprüche

1. Kommunikatonssystem zur Übertragung von Botschaften zwischen wengistens zwei Gerätestationen, wobei eine eine Botschaft empfangende Gerätestation anhand des Botschaftsinhaltes erkennt, ob diese Botschaft (auch) an sie gerichtet ist,
dadurch gekennzeichnet, daß für die Übertragung wenigstens zwei verschiedene Kommunikationstypen definiert sind, von denen ein erster Kommunikationstyp den Ruf wenigstens einer anderen Gerätestation zum Inhalt hat, wobei in der Botschaft ein Befehl bzw. eine gewünschte Funktion übertragen wird, und von denen ein zweiter Kommunikationstyp eine Mitteilung über einen neuen Gerätezustand der sendenden Gerätestation zum Inhalt hat, daß in jeder übertragenen Botschaft signalisiert wird, zu welchem Kommunikationstyp die Botschaft gehört, und daß eine empfangende Station in Abhängigkeit des Kommunikationstyps einer empfangenen Botschaft eine bestätigende Botschaft sendet oder nicht.

2. Kommunikatonssystem nach Anspruch 1,
dadurch gekennzeichnet, daß nach einer Botschaft des ersten Kommunikationstyps eine Botschaft eines dritten Kommunikationstyps erwartet wird, die eine Antwort der angerufenen Gerätestation an die rufende Gerätestation zum Inhalt hat.

3. Kommunikationssystem nach Anspruch 1,
dadurch gekennzeichnet, daß die rufende Station nach maximal vier Botschaften des ersten Kommunikationstyps die entsprechenden bestätigenden Botschaften des zweiten Kommunikationstyps erwartet.

4. Kommunikationssystem nach einem der Ansprüche 1 bis 3,
dadurch gekennzeichnet, daß nach Aussenden einer Botschaft des zweiten Kommunikationstyps an eine oder mehrere angerufene Gerätestation(en) durch diese keine Antwort gegeben wird.

5. Kommunikationssystem nach Anspruch 4,
dadurch gekennzeichnet, daß eine mit einer Botschaft des zweiten Kommunikationstyps angerufene Sendestation eine eine Fehlermeldung darstellende Botschaft eines vierten Kommunikationstyps an die sendende Station sendet, sofern die empfangende Station die ausgesendete Botschaft der zweiten Kommunikationsart nicht verstanden hat.

6. Kommunikationssystem nach Anspruch 5,
dadurch gekennzeichnet, daß die ursprünglich sendende Station nach Erhalt einer Fehlermeldung in Form einer Botschaft des vierten Kommunikationstyps die ursprünglich gesendete Botschaft des zweiten Kommunikationstyps wiederholt und daß diese Wiederholung einer Botschaft des dritten Kommunikationstyps als fünfter Kommunikationstyp in der Botschaft gekennzeichnet ist.

7. Kommunikationssystem nach einem der Ansprüche 1 bis 6,
dadurch gekennzeichnet, daß jede Gerätestation, die eine Botschaft senden will, zunächst bei einer Prioritäten-Vergabeeinheit anfragt, ob die zu sendende Botschaft gesendet werden darf bzw. welche Priorität diese Botschaft hat.

8. Kommunikationssystem nach einem der Ansprüche 1 bis 7 für Audio-/Video-Quellen und nachgeschaltete Verstärker bzw. Bildschirmgeräte,
dadurch gekennzeichnet, daß für die Umschaltung einer Quellenfunktion mittels einer Botschaft des ersten Kommunikationstyps zunächst die Quelle und erst nach Bestätigung durch die Quelle mittels einer Botschaft des dritten Kommunikationstyps mittels einer Botschaft des ersten Kommunikationstyps der Verstärker bzw. das Bildschirmgerät umgeschaltet wird und daß bei ausbleibender Bestätigung entweder der Quelle oder des Verstärkers bzw. Bildschirmgerätes mittels einer Botschaft des dritten Kommunikationstypes der Umschaltvorgang abgebrochen wird, d.h. alle beteiligten Geräte wieder in ihre Ausgangsfunktion zurückversetzt werden.

9. Kommunikationssystem nach einem der Ansprüche 1 bis 8,
dadurch gekennzeichnet, daß die Übertragung der Botschaften über einen Datenbus stattfindet.

10. Gerätestation für ein Kommunikationssystem nach Anspruch 9,
dadurch gekennzeichnet, daß die Gerätestation fünf Funktionsgruppierungen (layer) aufweist, daß eine erste Funktionsgruppierung (application layer) die Anwendungen bzw. Funktionen innerhalb eines der Gerätestation zugeordneten Gerätes steuert, daß eine zweite Funktionsgruppierung (session layer) die Steuerung der Übertragung von Botschaften einschließlich Definition bzw. Bestimmung des jeweiligen Kommunikationstyps vornimmt, daß eine dritte Funktionsgruppierung (network layer) die Auswahl eines Datenbussystems vornimmt, über das die Botschaften übertragen werden sollen, und daß eine vierte Funktionsgruppierung (logical link control-layer) die Steuerung gemäß der für diesen Datenbus vorgesehenen Protokolle übernimmt.
